# EUROPEAN PATENT APPLICATION

(11) **EP 4 723 658 A1**
(43) Date of publication of application: **08.04.2026**
(21) Application number: 24888900.8
(22) Date of filing: 23.08.2024
(51) Int. Cl.: H04N 23/57, H04N 23/54, H04N 23/55, G03B 17/12, G03B 30/00, H04M 1/02

(54) **ELECTRONIC DEVICE COMPRISING CAMERA**

(30) Priority: 06.11.2023 KR 20230151812; 19.12.2023 KR 20230186126
(71) Applicant: Samsung Electronics Co., Ltd., Suwon-si, Gyeonggi-do 16677 (KR)
(72) Inventor: JUN, Sungsoo, Suwon-si Gyeonggi-do 16677 (KR); KIM, Donghee, Suwon-si Gyeonggi-do 16677 (KR); KIM, Jaekook, Suwon-si Gyeonggi-do 16677 (KR); KIM, Jinyong, Suwon-si Gyeonggi-do 16677 (KR); LEE, Seunghoon, Suwon-si Gyeonggi-do 16677 (KR); KIM, Sungjun, Suwon-si Gyeonggi-do 16677 (KR); KIM, Youngkyu, Suwon-si Gyeonggi-do 16677 (KR); JUNG, Chaeyeol, Suwon-si Gyeonggi-do 16677 (KR); YOO, Minwoo, Suwon-si Gyeonggi-do 16677 (KR)
(74) Representative: Gulde & Partner
(86) International application number: PCT/KR2024/012608
(87) International publication number: WO 2025/100704

(57) **Abstract**

According to various embodiments, an electronic device may include: a transparent member visually exposed to an outside of the electronic device; a support member configured to support the transparent member and includes an opening corresponding to the transparent member; an image sensor configured to detect light entering through the transparent member; a body tube configured to accommodate at least one lens; and an intermediate member in contact with a side surface of the body tube that faces the support member, at least part of the intermediate member being provided between the support member and the body tube.

## Description

### [Technical Field]

The disclosure relates to an electronic device including a camera.

### [Background Art]

Electronic devices may refer to electronic schedulers, portable multimedia players, mobile communication terminals, tablet personal computers (PCs), video/audio devices, desk top computers/laptops or devices performing specific functions according to programs loaded therein, such as navigation systems for vehicles, as well as home appliances. For example, such electronic devices may output stored information as sound or images. As integration of electronic devices increases and superhigh-speed, high-capacity wireless communication becomes common, a single electronic device such as a mobile communication terminal may have various functions loaded therein. For example, a communication function, an entertainment function (for example, games), a multimedia function (for example, a music/video replay function), a security function (for example, an authentication function for mobile banking or an electronic wallet), or a schedule management function may be integrated into one electronic device. Miniaturized, lightened electronic devices may be provided for users to easily carry.

As integration of electronic devices increases, camera (digital cameras) for obtaining image data may be miniaturized. As sizes of cameras are miniaturized, one or more camera modules may be mounted in an electronic device. One or more camera modules mounted in an electronic device may generate signals for generating image data based on light received from the outside of the electronic device.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

According to an embodiment of the disclosure, an electronic device may include a transparent member, a support member, an image sensor, and an intermediate member. The transparent member may be disposed to be visually exposed to an outside of the electronic device. The support member may be configured to support the transparent member and may include an opening corresponding to the transparent member. The image sensor may detect light entering through the transparent member. A body tube may accommodate at least one lens. The intermediate member may contact a side surface of the body tube that faces the support member, at least part of the intermediate member being provided between the support member and the body tube.

According to an embodiment of the disclosure, an intermediate member covering at least part of a gap between a body tube and a support member may include a first area comprising a plane portion at least partially provided on the support member; and a second area extending from the first area and at least partially in contact with the body tube. The a part in contact with the body tube may include a curved portion.

### [Brief Description of Drawings]

FIG. 1 is a perspective view illustrating a front surface of an electronic device according to an embodiment;
FIG. 2 is a perspective view illustrating a rear surface of the electronic device according to an embodiment;
FIG. 3 is a perspective view illustrating external components of an electronic device according to an embodiment;
FIG. 4 is a cross-sectional view taken on line C-C' of FIG. 3, conceptually illustrating an example of arrangement relationship of components in the electronic device according to an embodiment;
FIG. 5 is an exploded perspective view illustrating internal components of the electronic device of FIG. 3 according to an embodiment;
FIG. 6 is a cross-sectional view taken on line C-C' of FIG. 3, illustrating an example of arrangement relationship of components in the electronic device according to an embodiment;
FIG. 7 is a view illustrating an example of a camera module the inside of which is visually seen when a gap between a support member and a body tube is viewed from the outside, based on the absence of an intermediate member of FIG. 6 according to an embodiment;
FIG. 8 is a view illustrating an example of an end of the intermediate member of FIG. 6 which is visually seen when viewed from the outside according to an embodiment;
FIG. 9 is a perspective view and a side view of an intermediate member according to an embodiment;
FIG. 10 is a cross-sectional view taken on line C-C' of FIG. 9, illustrating the intermediate member according to an embodiment;
FIG. 11 is a view illustrating an example of the intermediate member of FIG. 6 which is attached to one surface of a buffering member and is disposed in contact with one surface of a camera module according to an embodiment;
FIG. 12 is a view illustrating an example of the intermediate member of FIG. 11 which has an end disposed to face a transparent member according to an embodiment;
FIG. 13 is a view illustrating an example of the intermediate member of FIG. 6 which is disposed independently from the buffering member according to an embodiment;
FIG. 14 is a view illustrating an example of the intermediate member which is attached to one surface of a support member and is disposed between the support member and the buffering member according to an embodiment;
FIG. 15 is a view illustrating an electronic device in a network environment according to an embodiment; and
FIG. 16 is a block diagram illustrating a camera module according to an embodiment.

Regarding explanation of the drawings, the same or like reference numerals may be used to refer to the same or like components.

### [Mode for the Invention]

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

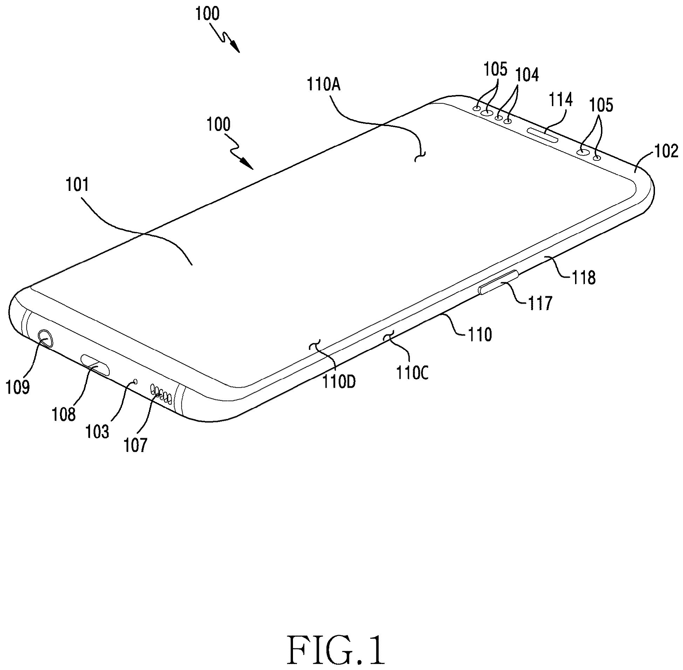

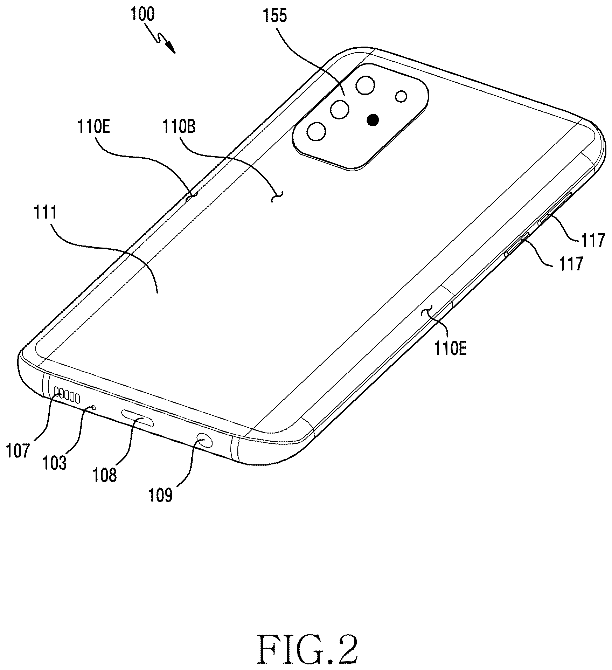

FIG. 1 is a perspective view of a front surface of an electronic device 100 according to an embodiment, and FIG. 2 is a perspective view of a rear surface of the electronic device 100 according to an embodiment.

Referring to FIGS. 1 and 2, the electronic device 100 according to an embodiment may include a housing 110 which includes a first surface (or a front surface) 110A, a second surface (or a rear surface) 110B, and a side surface 110C surrounding a space between the first surface 110A and the second surface 110B. In another embodiment (not shown), the housing may refer to a structure that forms a part of the first surface 110A of FIG. 1, the second surface 110B of FIG. 2, and the side surface 110C. According to an embodiment, the first surface 110A may be formed by a front surface plate 102 having at least a part substantially transparent (for example, a glass plate including various coating layers, or a polymer plate as the front surface plate). In another embodiment, the front surface plate 102 may be coupled to the housing 110 to form an inner space with the housing 110. In various embodiments, the "inner space" may refer to a space that accommodates at least part of a display 101 as an inner space of the housing 110.

According to various embodiments, the second surface 110B may be formed by a rear surface plate 111 which is substantially opaque. The rear surface plate 111 may be formed by, for example, coated or colored glass, ceramic, a polymer, metal (for example, aluminum, stainless steel (STS), or magnesium), or a combination of at least two of the above-mentioned materials. The side surface 110C may be formed by a side surface bezel structure 118 (or a "side surface member") which is coupled with the front surface plate 102 and the rear surface plate 111 and includes metal and/or a polymer. In various embodiments, the rear surface plate 111 and the side surface bezel structure 118 may be integrally formed with each other, and may include the same material (for example, a metallic material such as aluminum).

In the illustrated embodiment, the front surface plate 102 may include two first areas 110D (for example, curved areas) bent from the first surface 110A toward the rear surface plate 111 and seamlessly extended, and disposed on both ends of long edges of the front surface plate 102. In the illustrated embodiment, the rear surface plate 111 may include two second areas 110E (for example, curved areas) bent from the second surface 110B toward the front surface plate 102 and seamlessly extended, and disposed on both ends of long edges. In various embodiments, the front surface plate 102 (or the rear surface plate 111) may include only one of the first areas 110D (or the second areas 110E). In another embodiment, a part of the first areas 110D or the second areas 110E may not be included. In the above-described embodiments, when viewed from a side of the electronic device 100, the side surface bezel structure 118 may have a first thickness (or width) on a side surface that does not include the first areas 110D or the second areas 110E described above (for example, a side surface on which a connector hole 108 is formed), and may have a second thickness, which is thinner than the first thickness, on a side surface that includes the first areas 110D or the second areas 110E (for example, a side surface on which a key input device 117 is disposed).

According to an embodiment, the electronic device 100 may include at least one of the display 101, audio modules 103, 107, 114, a sensor modules 104, camera modules 105, 155, the key input device 117, a light emitting element 106, and connector holes 108, 109. In various embodiments, the electronic device 100 may omit at least one of the components (for example, the key input device 117 or the light emitting element 106) or may additionally include other components.

The display 101 may be exposed through a corresponding portion of the front surface plate 102, for example. In various embodiments, at least part of the display 101 may be exposed through the front surface plate 102 forming the first surface 110A and the first area 110D of the side surface 110C. In various embodiments, a corner of the display 101 may be formed substantially the same as a shape of an outside border of the front surface plate 101 adjacent thereto. In an embodiment, a gap between the outside border of the display 101 and the outside border of the front surface plate 102 may be formed substantially the same to extend an exposed area of the display 101.

In an embodiment, a recess or an opening may be formed on a part of a screen display area (for example, an activation area) of the display 101 or an area (for example, an inactivation area) that is out of the screen display area, and the electronic device 100 may include at least one of the audio module 114, the sensor module 104, the camera modules 105, 155, and the light emitting element 106 aligned with the recess or the opening. In an embodiment, the electronic device may include at least one of the audio module 114, the sensor module 104, the camera modules 105, 155, and the light emitting element 106 disposed on a rear surface of the screen display area of the display 101. In an embodiment, the display 101 may be coupled with or may be disposed adjacent to a touch sensing circuit, a pressure sensor for measuring an intensity (pressure) of a touch, and/or a digitizer for detecting a stylus pen of a magnetic field method. In a certain embodiment, at least part of the sensor module 104, and/or at least part of the key input device 117 may be disposed on the first areas 110D and/or the second areas 110E.

The audio modules 103, 107, 114 may include a microphone hole 103 and speaker holes 107, 114. The microphone hole 103 may have a microphone disposed therein to acquire an external sound, and in various embodiments, the microphone hole may have a plurality of microphones disposed therein to detect a direction of a sound. The speaker holes 107, 114 may include an external speaker hole 107 and a receiver hole 114 for calling. In various embodiments, the speaker holes 107, 114 and the microphone hole 103 may be implemented as one hole or a speaker may be included without the speaker holes 107, 114 (for example, a piezo speaker).

The sensor module 104 may generate an electric signal or a data value corresponding to an internal operation state or an external environment state of the electronic device 100. The sensor module 104 may include, for example, a first sensor module 104 (for example, a proximity sensor) and/or a second sensor module (for example, a fingerprint sensor) disposed on the first surface 110A of the housing 110, and/or other sensor modules 119 (for example, an HRM sensor or a fingerprint sensor) disposed on the second surface 110B of the housing 110. The fingerprint sensor may be disposed not only on the first surface 110A of the housing 110 (for example, the display 101), but also on the second surface 110B. The electronic device 100 may further include a sensor module, for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 104.

The camera modules 105, 155 may include a first camera device 105 disposed on the first surface 110A of the electronic device 100, and a second camera device 155 disposed on the second surface 110B. The camera modules 105, 155 may include one or a plurality of lenses, an image sensor, and/or an image signal processor. A flash may be disposed on the second surface 110B. The flash may include, for example, a light emitting diode or a xenon lamp. In various embodiments, two or more lenses (an infrared camera, a wide-angle lens and a telephoto lens) and image sensors may be disposed on one surface of the electronic device 100.

The key input device 117 may be disposed on the side surface 110C of the housing 110. In an embodiment, the electronic device 100 may not include a part or an entirety of the key input devices 117 mentioned above, and the key input device 117 that is not included may be implemented on the display 101 in other forms such as a soft key.

The light emitting element 106 may be disposed on the first surface 110A of the housing 110, for example. For example, the light emitting element 106 may provide state information of the electronic device 100 in the form of light. In an embodiment, the light emitting element 106 may provide a light source interlocking with an operation of the camera module 105. The light emitting element 106 may include, for example, a light emitting diode (LED), an infrared LED (IR LED), and a xenon lamp.

The connector holes 108, 109 may include a first connector hole 108 to accommodate a connector (for example, a USB connector) for exchanging power and/or data with an external electronic device, and/or a second connector hole (for example, an earphone jack) 109 to accommodate a connector for exchanging an audio signal with an external electronic device.

However, the configuration of the electronic device 100 illustrated in FIGS. 1 and 2 is merely an example and is not limited thereto. For example, at least part of the components of the electronic device 100 illustrated in FIGS. 1 and 2 may be omitted, positions of the components may be changed, or the components may be substituted with other components.

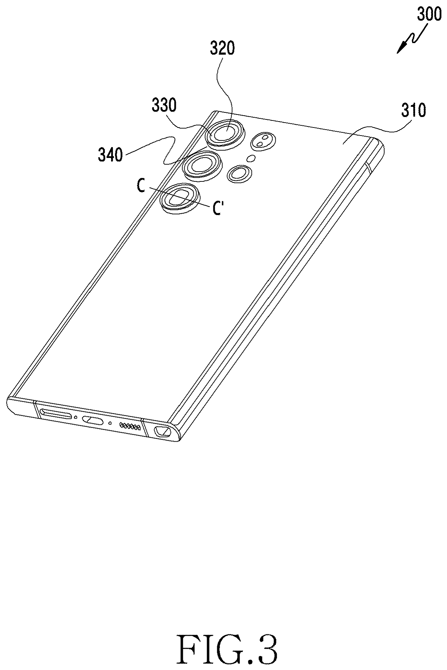

According to an embodiment of the disclosure, FIG. 3 is a perspective view illustrating external components of an electronic device.

According to an embodiment, the electronic device 300 may correspond to the electronic device 100 of FIG. 1. The electronic device 300 may include a cover member 310, a transparent member 320, a support member 330, and at least one opening 340. The cover member 310 may be formed on the rear surface plate 111 of the electronic device 300. The cover member 310 may include at least one opening 340. At least part of the support member 330 may be inserted into at least one opening 340 formed on at least part of one surface of the cover member 310. The support member 330 may include an exposure portion 335. The exposure portion 335 may include a portion that is exposed to the outside of the electronic device 300. For example, the exposure portion 335 may be integrally formed with the support member 330. For example, the exposure portion 335 may be formed as a separate member from the support member 330, and may be coupled with the support member 330 through at least one of an adhesive or an adhering member. A camera module 155 may be disposed to face one surface of the transparent member 320. For example, one surface of the transparent member 320 may be a surface that faces the inside of the electronic device 300. For example, one surface of the transparent member 320 may be a surface that faces a direction of external light entering the transparent member 320. The camera module 155 may be disposed to receive light entering through any one of the at least one opening 340 and the transparent member 320. The camera module 155 may include at least one lens, a body tube to accommodate the at least one lens, and an image sensor disposed to receive external light.

The support member 330 may be disposed to correspond to the at least one opening 340. For example, the support member 330 may be a member for supporting the transparent member 320. For example, the support member 330 may be a member that protects the at least one lens and the image sensor from the outside. The support member 330 may include an opening corresponding to the transparent member 320. The transparent member 320 may be disposed in the opening. For example, the transparent member 320 may be attached to the support member 330 through an adhering member (for example, a tape). For example, the transparent member 320 may be coupled with the support member 330 in an assembly method for securing at least part of the transparent member 320 and at least part of the support member 330, without using an adhesive or an adhering member. For example, the transparent member 320 and the support member 330 may be integrally formed with each other. External light entering through the transparent member 320 may be transmitted to the image sensor through the at least one lens.

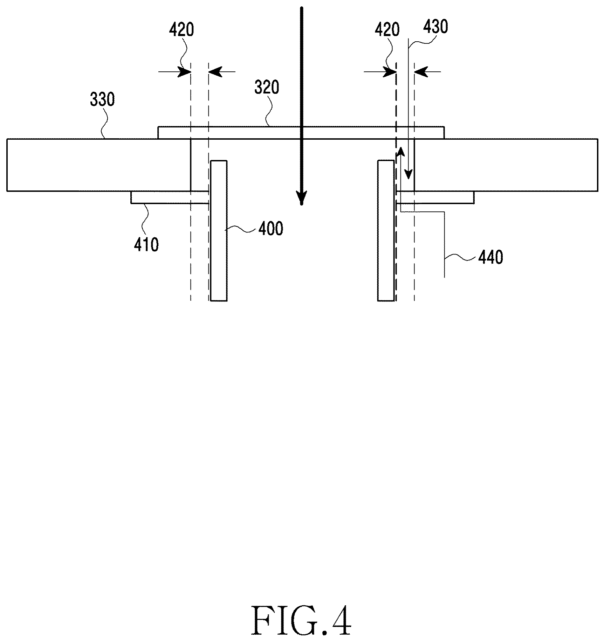

According to an embodiment of the disclosure, FIG. 4 is a view conceptually illustrating an example of arrangement relationship of components on a cross section taken on line C-C' in the electronic device of FIG. 3.

According to an embodiment, the electronic device 300 may include the transparent member 320, the support member 330, an intermediate member 410, and the camera module 155. The camera module 155 may be disposed in the electronic device 300 to receive light passing through the transparent member 320 and to shoot an image. For example, when viewed from the outside of the electronic device 300, a body tube 400 of the camera module 155 may be disposed on the rear surface of the transparent member 320. The camera module 155 may include at least one lens, the body tube 400, and an image sensor. When a camera is driven, the body tube 400 may be moved. As the body tube 400 is moved, the body tube 400 may collide with the support member 330, degrading durability of the camera. In order to prevent degradation of durability of the camera, the body tube 400 may be disposed to form a predetermined gap 420 between the support member 330 and the body tube 400. However, an inner structure of the electronic device 300 may be visually exposed from the outside of the electronic device 300 through the predetermined gap 420, and thus, there may be a problem that aesthetic features of the electronic device 300 are degraded. For example, as the predetermined gap 420 is formed, inner structures of the camera module 155 are visible through a first path 430 when the transparent member 320 is viewed from the outside, and thus, the feeling of use or aesthetic features may be degraded. For example, internal warm air may be transmitted to the transparent member 320 through a second path 440 due to heat emission of the electronic device 300, and thus, stream may be generated on the transparent member 320. To solve the problems arising due to the presence of the predetermined gap 420, the intermediate member 410 for visually covering the predetermined gap 420 may be disposed between the support member 330 and the body tube 400.

In the disclosure, the support member 330 may be mentioned as a component seated on one surface of the cover member 310 for convenience of explanation, but the support member 330 is merely a component that forms an opening for the camera module 155 to receive light, and is not limited to the shape illustrated in FIG. 3. For example, the support member 330 may be integrally formed with the cover member 310. For example, the support member 330 may be integrally formed with the transparent member 320. For example, although it is illustrated in FIG. 3 that at least part of the support member 330 protrudes from a surface on which the cover member 310 is disposed, the support member 330 may be disposed not to protrude from a surface of the cover member 310. In the disclosure, such terms as the cover member 310, the transparent member 320, the support member 330, and the intermediate member 410 are designated to indicate components, and do not limit features of the components by themselves. For example, the intermediate member 410 may be referred to as a covering member or a filling member.

According to an embodiment of the disclosure, one surface of the intermediate member 410 may be disposed on one surface of the support member 330, and the other surface may contact the body tube 400. One surface of the intermediate member 410 may be attached to the support member 330, and the other surface may contact the body tube 400. However, a position where the intermediate member 410 is attached or disposed is not limited to that of FIG. 4, and may be changed and embodied within a range of the purpose for visually covering the predetermined gap 420. At least part of the intermediate member 410 may be formed with a material having elasticity. For example, the intermediate member 410 may include rubber or an elastomer material. The intermediate member 410 may be formed with a material that does not have elasticity of a predetermined value or higher. For example, the intermediate member 410 may be formed with plastics having elasticity of less than the predetermined value. The intermediate member 410 may include a structure enabling a shape to be deformed. For example, the intermediate member 410 may include an area that has a thickness thinner than those of other areas, and may be configured to have the thinner area deformed by an external force.

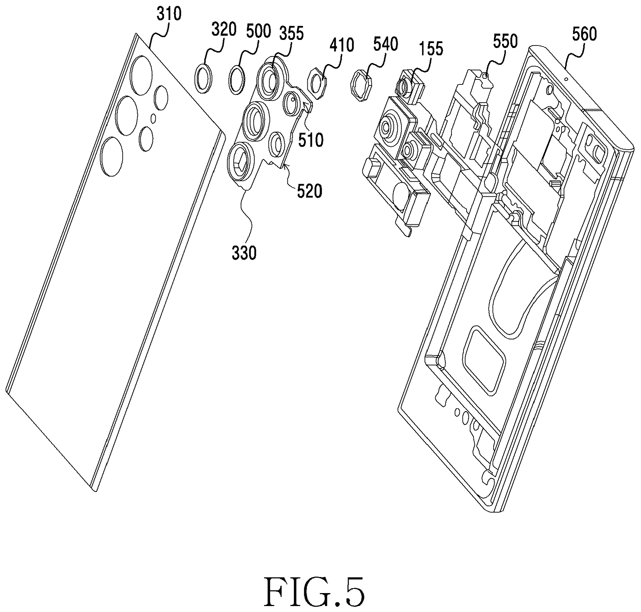

According to an embodiment of the disclosure, FIG. 5 is an exploded perspective view illustrating inner components of the electronic device of FIG. 3.

According to an embodiment of the disclosure, the electronic device 300 may include the transparent member 320, the support member 330, the intermediate member 410, and a buffering member 540. The support member 330 may include a first surface 510 facing a first direction and a second surface 520 facing a second direction opposite to the first direction. For example, the first direction may be a direction facing the outside of the electronic device 300. For example, the first direction may be a direction facing the transparent member 320. For example, the second direction may be a direction facing the inside of the electronic device 300. For example, the second direction may be a direction facing the intermediate member 410.

According to an embodiment of the disclosure, the support member 330 may include the exposure portion 355. The exposure portion 335 may be inserted into at least one opening 340 formed on the cover member 310. The exposure portion 335 may be inserted into at least one opening 340, such that at least part of the exposure portion 335 is visually exposed to the outside of the electronic device 300. The exposure portion 335 may be a part of the support member 330, or may be a separate member from the support member 330. For example, the exposure portion 335 and the support member 330 may be manufactured as a single member. For example, the exposure portion 335 may be manufactured as a separate member from the support member 330, and may be attached to the support member 330 through at least one of an adhesive or an adhering member.

According to an embodiment of the disclosure, the transparent member 320 may be disposed on the first surface 510 of the support member 330. The transparent member 320 may be seated on the support member 330 to allow light passing through the transparent member 320 in the second direction to enter the camera module. For example, the transparent member 320 may be disposed to cover an opening formed on the first surface 510 of the support member 330 to correspond to the transparent member 320. When there are a plurality of openings, a plurality of transparent members 320 may also be disposed to cover the plurality of openings. The transparent member 320 may be attached to the support member 330 through an adhering member (for example, a tape, an adhesive). For example, the transparent member 320 may be attached to the opening of the support member 330 through an adhering member (for example, a tape 500). However, this should not be considered as limiting. For example, the transparent member 320 may be coupled to the opening of the support member 330 by an assembly method for securing at least part of the transparent member 320 and at least part of the support member 330. For example, the transparent member 320 and the support member 330 may be integrally formed with each other. When there are a plurality of transparent members 320, a plurality of support members 330 may be attached to the plurality of transparent members 320, respectively.

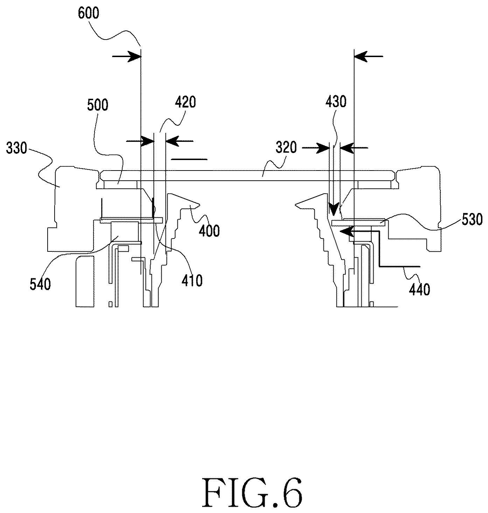

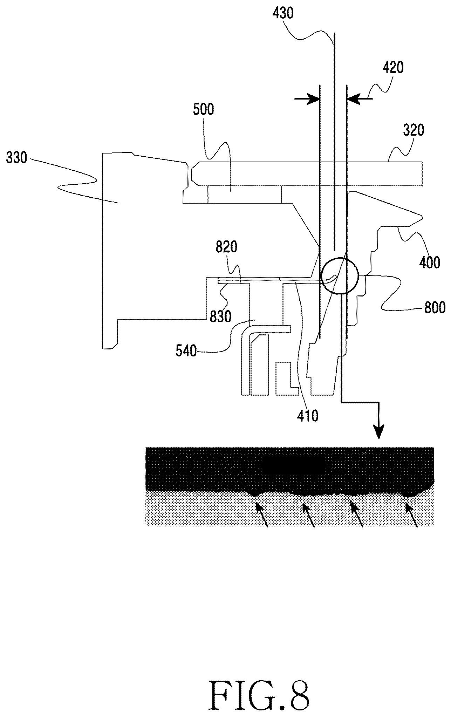

According to an embodiment, the intermediate member 410 may have at least a part disposed on the second surface 520 of the support member 330. The intermediate member 410 may have at least a part attached to the second surface 520 of the support member 330. The intermediate member 410 may be attached to the support member 330. A detailed structure of the intermediate member 410 will be described below with reference to FIGS. 6 to 7, and a position where the intermediate member 410 is disposed or attached, and coupling relationship with other components will be described below with reference to FIGS. 8 to 13. When there are a plurality of openings, a plurality of intermediate members 410 may be disposed to correspond to the number of the plurality of openings.

According to an embodiment, the buffering member 540 may be disposed on one surface of the intermediate member 410. The buffering member 540 may be attached to one surface of the intermediate member 410. For example, one surface of the intermediate member 410 may be a surface disposed to face the transparent member 320. For example, one surface of the intermediate member 410 may be a surface disposed to face the inside of the electronic device 300. The buffering member 540 may be formed with a material to mitigate an impact generated when a component movable in the camera module 155 collides with another component. For example, the material of the buffering member 540 may be sponge or rubber. A position where the buffering member 540 is attached, and a material of the buffering member 540 are not limited to the example of FIG. 5, and may be appropriately changed within a range for achieving objects. An arrangement or attachment relationship of the buffering member 540 and the intermediate member 410 will be described below with reference to FIGS. 8 to 13. When there are a plurality of openings, a plurality of buffering members 540 may be disposed to correspond to the number of the plurality of openings.

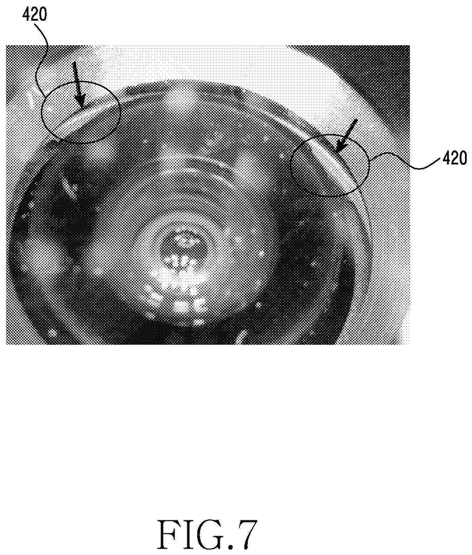

According to an embodiment, FIG. 6 is a cross-sectional view taken on line C-C' of FIG. 3, illustrating an example of arrangement relationship of components in the electronic device. FIG. 7 is a view illustrating an example of an inside of a camera module which is visually seen when a gap between a support member and a body tube is viewed from the outside in a state in which the intermediate member of FIG. 6 is not disposed.

According to an embodiment of the disclosure, the electronic device 300 may include the transparent member 320, the support member 330, the body tube 400, and the buffering member 540. The support member 330 may include an opening 600 corresponding to the transparent member 320. The transparent member 320 may be attached to the opening 600. For example, the transparent member 320 may be attached to the support member 330 through the tape 500. For example, the transparent member 320 may be coupled with the support member 330 by an assembly method. For example, the transparent member 320 and the support member 330 may not be separated and may be integrally formed with each other. External light of the electronic device 300 may enter the inside of the electronic device 300 through the transparent member 320. The incident light may be transmitted to at least one lens accommodated in the body tube 400.

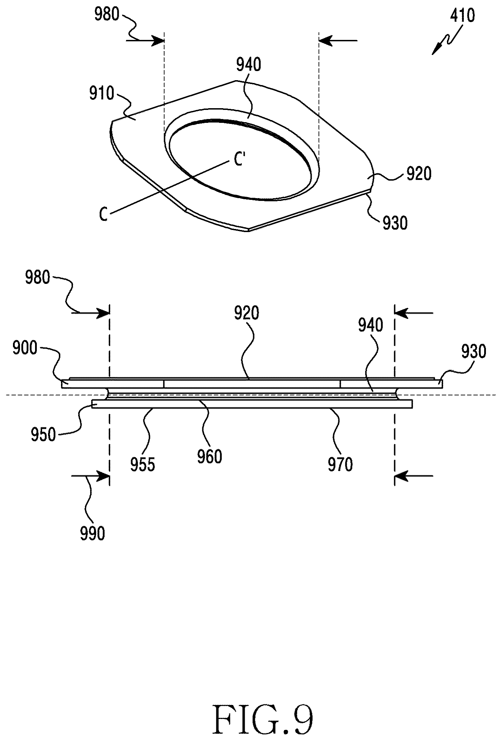

According to an embodiment of the disclosure, as a camera is driven, the body tube 400 may be moved. As the body tube 400 is moved, the body tube 400 may collide with the support member 330 disposed adjacent to the body tube 400, degrading durability. A predetermined gap 420 may be formed between the body tube 400 and the support member 330 to guarantee a space where the body tube 400 is moved. However, a problem may arise as the predetermined gap 420 is formed. For example, when the transparent member 320 is viewed form the outside of the electronic device 300 through a first path 430, inner components of the camera module 155 may be visible to naked eyes as shown in FIG. 9. For example, moisture may be formed on the transparent member 320 due to air flowing through a second path 440.

According to an embodiment of the disclosure, in order to prevent the above-mentioned problems, the intermediate member 410 may be disposed between the body tube 400 and the support member 330. One surface of the intermediate member 410 may be attached and fixed to one surface of the support member 330. At least part of the intermediate member 410 may be in contact with the body tube 400 to fill the predetermined gap 420. Based on the intermediate member 410 filling the predetermined gap 420, inner components of the camera module 155 may be covered to be invisible (e.g., not visually exposed) from the outside of the electronic device 300. In addition, the intermediate member 410 may prevent warm air generated due to heat emission of the electronic device 300 (for example, heat emission of a battery or a circuit board) from traveling toward the transparent member 320 from the inside of the electronic device 300. The intermediate member 410 prevents air in the inner space of the electronic device 300 from coming into contact with the transparent member 320, so that the transparent member 320 is prevented from steaming up.

According to an embodiment of the disclosure, the buffering member 540 may be disposed on the other surface of the intermediate member 410. The buffering member 540 may be attached to the other surface of the intermediate member 410. For example, the buffering member 540 may prevent contaminants in the electronic device 300 from flowing into a space formed between the transparent member 320 and the body tube 400. For example, when an impact is applied to the electronic device 300 from the outside of the electronic device 300, the buffering member 540 may absorb the impact applied to the electronic device 300 and may prevent the impact from being directly transmitted to the camera.

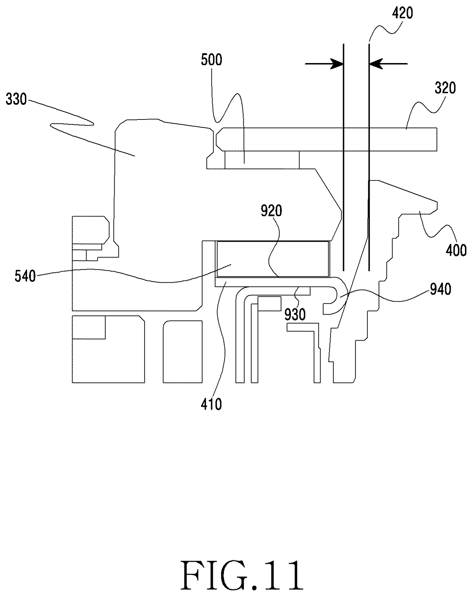

According to an embodiment of the disclosure, positions and attachment relationship of the support member 330, the intermediate member 410, and the buffering member 540 are not limited to the example of FIG. 6, and may be appropriately changed and embodied within a range for achieving objects as shown in FIGS. 11 to 13.

According to an embodiment of the disclosure, FIG. 8 is a view illustrating an example of an end of the intermediate member of FIG. 6 that is visible when viewed from the outside.

According to an embodiment of the disclosure, FIG. 8 is a view illustrating an example of at least part of the intermediate member 410 that is visible when the transparent member 320 is viewed from the outside of the electronic device 300. Compared to the intermediate member of FIGS. 11 to 13, the intermediate member 410 of FIG. 8 may not include a curved portion (for example, a curved portion 940 of FIG. 9) which is bent in the opposite direction of the transparent member 320. As an end 800 of the intermediate member 410 contacts the body tube 400, the predetermined gap 420 between the support member 330 and the body tube 400 may be visually blocked when viewed from the outside of the electronic device 300.

According to an embodiment, at least part of the intermediate member 410 may be deformed as the body tube 400 moves. When viewed from the outside through a first path 430, the end 800 of the intermediate member 410 may be exposed. Since a curved portion (for example, the curved portion 940 of FIG. 9) is not separately included, the degree of freedom in using a space formed by the support member 330 and the body tube 400 may increase. In addition, separate processing may be conducted to make the end 800 invisible when the end 800 of the intermediate member 410 is viewed from the outside through the first path 430, so that a problem of degradation of esthetic features caused due to the exposure of the end 800 is solved. For example, the intermediate member 410 of dark color may be used. For example, a separate print or seal may be used for the end 800 to prevent an uneven portion of the end 800 from being exposed to the outside.

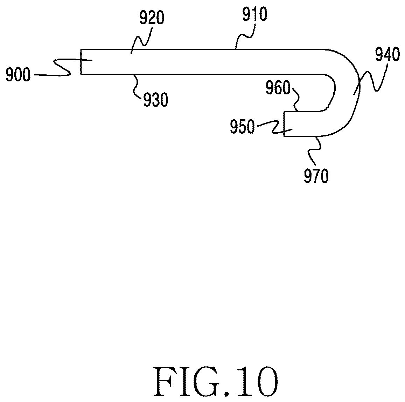

According to an embodiment of the disclosure, FIG. 9 is a perspective view and a side view of the intermediate member. FIG. 10 is a cross-sectional view taken on line C-C' of FIG. 9, illustrating the intermediate member.

According to an embodiment, the intermediate member 410 may include a first area 900, a curved portion 940, and a second area 950. Referring to the perspective view of FIG. 9, the first area 900 may include a first plane portion 910 and a first opening portion 980. The first plane portion 910 may include a first surface 920 facing a first direction and a second surface 930 facing a second direction opposite to the first direction. For example, the first surface may be disposed to face the outside of the electronic device 300. For example, the first surface may be disposed to face the support member 330. For example, the second surface may be disposed to face the inside of the electronic device 300. For example, the second surface may be disposed to face the opposite direction of the transparent member 320.

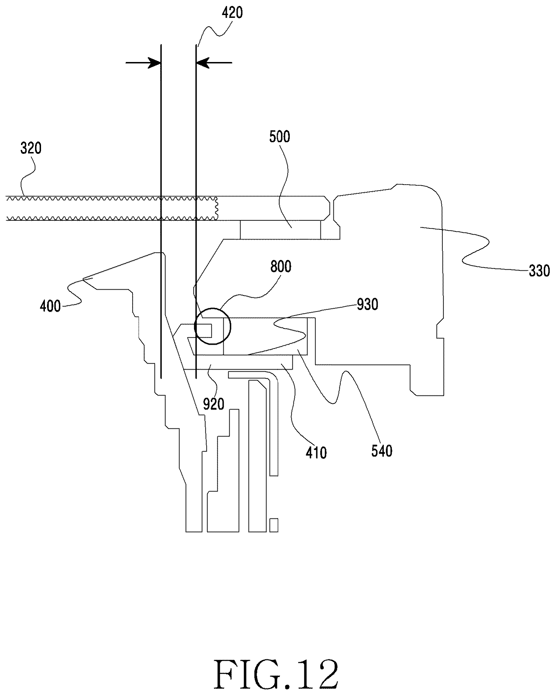

According to an embodiment, referring to FIG. 10, the first surface 920 of the first plane portion 910 may be attached to another member inside. For example, the first surface 920 may be attached to one surface of the support member 330. For example, the first surface 920 may be attached to one surface of the buffering member 540. Alternatively, referring to FIG. 12 which will be described below, the second surface 930 may be attached to at least one of the support member 330 or the buffering member 540.

According to an embodiment, referring to the side view of FIG. 9, the second area 950 may include a second opening portion 990 and a second plane portion 955. The intermediate member 410 may form an opening penetrating through the first opening portion 980 and the second opening portion 990. The second plane portion 955 may include a third surface 960 facing a third direction and a fourth surface 970 facing a fourth direction opposite to the third direction. For example, the third surface 960 may be formed to face the second surface 930. For example, the third surface may be disposed to face the same or similar direction as or to the first surface. For example, the fourth surface may face the same or similar direction as or to the second surface.

According to an embodiment of the disclosure, referring to the side view of FIG. 9, an inner circumference of the first opening portion 980 and an inner circumference of the second opening portion 990 of the intermediate member 410 may be formed to surround the body tube 400. For example, the first opening portion 980 and the second opening portion 990 may be formed by penetrating and may be connected by the curved portion 940. At least part of the curved portion 940 may contact the body tube 400, such that the inner circumference of the first opening portion 980 and the inner circumference of the second opening portion 990 may surround the body tube 400. Light entering from the outside through the transparent member 320 may be transmitted to at least one lens accommodated in the body tube 400 through the first opening portion 980 and the second opening portion 990. External light passing through the at least one lens may be collected at least one image sensor.

According to an embodiment of the disclosure, referring to the side view of FIG. 9 and the cross-sectional view of FIG. 10, the intermediate member 410 may include the curved portion 940. The curved portion 940 may be formed to be extended from the first area 900 and connected to the second area 950. At least part of the curved portion 940 may be formed in a bent shape to face the opposite direction of the transparent member 320. At least part of the curved portion 940 may be in contact with the body tube 400. As at least part of the curved portion 940 is in contact with the body tube 400, the predetermined gap 420 may be filled. A diameter of the inner circumference of the curved portion 940 may gradually increase from the center of the curved portion 940 toward the first opening portion 980 and the second opening portion 990.

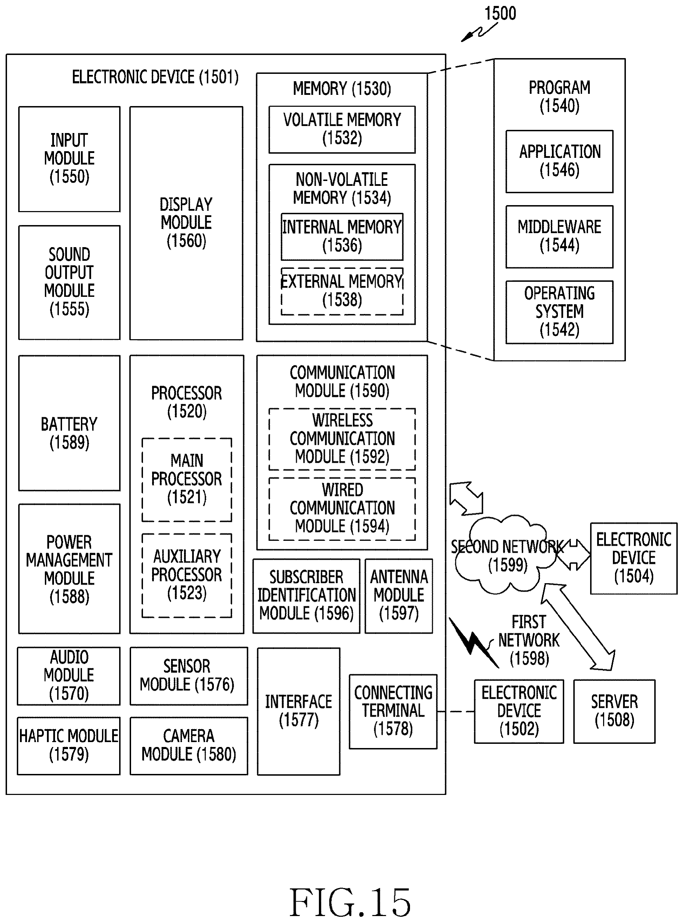

According to an embodiment of the disclosure, the body tube may be moved based on the camera being driven. The body tube 400 may be moved while the camera module 155 is operating. For example, the body tube 400 may be moved when the camera module 155 performs an auto focus function or by an operation of a stabilizer (for example, an image stabilizer 1640 of FIG. 15) for performing an image stabilization function. For example, the body tube 400 may be seated in a carrier and may be moved along the carrier as an actuator configured to move the carrier operates under the control of a driving integrated circuit (IC) is driven. The intermediate member 410 may be formed with an elastic material such that the body tube 400 moves even when the intermediate member 410 contacts the body tube 400. In an embodiment, the first area 900 of the intermediate member 410 may have a first thickness, and the curved portion 940 may have a second thickness thinner than the first thickness. The second thickness may be thin, such that a repulsive force transmitted from the intermediate member 410 to the body tube 400 may be reduced. However, the thickness of the curved portion 940 is not limited to being thinner than the first thickness, and may be equal to or greater than the first thickness within a range for achieving objects.

According to an embodiment, the electronic device 300 may include at least one actuator. For example, the electronic device 300 may include an actuator for performing an auto focus function or an actuator for performing an image stabilization function (for example, an image stabilization function in a lens shift method). As the body tube 400 moves, the shape of the intermediate member 410 may be deformed. As the shape of the intermediate member 410 is deformed, a repulsive force may be transmitted to the body tube 400. In order to correct an error caused by the repulsive force of the intermediate member 410, the electronic device 300 may apply offset to a control value for driving the actuator according to information (for example, position information of a carrier of an image stabilizer) corresponding to a position of the body tube 400. For example, the electronic device 300 may acquire, as information related to the position of the body tube 400, a position of the carrier included in the image stabilizer by using a hall sensor.

However, the shape of the intermediate member 410 shown in FIG. 9 or 10 is merely an example and the shape of the intermediate member 410 according to an embodiment is not limited to the shape illustrated in FIG. 9 or 10. The intermediate member 410 according to an embodiment may have a different shape to fill the gap between the support member 330 and the body tube 400. For example, the intermediate member 410 may omit at least one of the curved portion 940 or the second area 950.

According to an embodiment of the disclosure, FIG. 11 is a view illustrating an example of the intermediate member of FIG. 6 which is attached to one surface of the buffering member and is disposed in contact with one surface of the camera module.

According to an embodiment, FIG. 11 is a view illustrating an example of the intermediate member 410 and the buffering member 540 which are arranged in the opposite order to that of FIG. 8. One surface of the buffering member 540 may be disposed on one surface of the support member 330. One surface of the buffering member 540 may be attached to one surface of the support member 330. The plane portion 910 formed on the first surface 920 of the first area 900 of the intermediate member 410 may be disposed on the other surface of the buffering member 540. The plane portion 910 formed on the first surface 920 of the first area 900 of the intermediate member 410 may be attached to the other surface of the buffering member 540. The intermediate member 410 may include the curved portion 940 which is extended from the first area 900 and has one end bent to face the opposite direction of the transparent member 320. Based on one end of the curved portion 940 being bent to face the opposite direction of the transparent member 320, the end 800 of the curved portion 940 may be invisible when the transparent member 320 is viewed from the outside of the electronic device 300. As the end 800 is invisible, aesthetic features of the electronic device 300 may be enhanced.

According to an embodiment of the disclosure, as at least part of the curved portion 940 contacts the body tube 400, the predetermined gap 420 formed between the support member 330 and the body tube 400 may be covered. As the curved portion has one end bent to face the opposite direction of the transparent member 320, there is an effect of improving esthetic features of the electronic device.

According to an embodiment of the disclosure, FIG. 12 is a view illustrating an example of an end of the transparent member of FIG. 11 which is disposed to face the transparent member.

According to an embodiment of the disclosure, FIG. 12 is a view illustrating an example of the curved portion 940 of the intermediate member 410 which is bent to face the transparent member 320. One surface of the buffering member 540 may be disposed on one surface of the support member 330. One surface of the buffering member 540 may be attached to one surface of the support member 330. The second surface 930 of the first area 900 of the intermediate member 410 may be disposed on the other surface of the buffering member 540. The second surface 930 of the first area 900 of the intermediate member 410 may be attached to the other surface of the buffering member 540. The intermediate member 410 may be disposed as shown in FIG. 11 or 12. However, the arrangement of the intermediate member 410 is not limited thereto, and may be appropriately changed and embodied within a range for achieving objects.

According to an embodiment of the disclosure, at least part of the curved portion 940 may contact the body tube 400. However, in the example of FIG. 12, the end 800 of the curved portion 940 of the intermediate member 410 is formed to face the transparent member 320, and accordingly, when the transparent member 320 is viewed from the outside of the electronic device 300, the end 800 of the intermediate member 410 may be visually seen through the predetermined gap 420. The end 800 of the intermediate member 410 may be disposed to be drawn in a space formed by the support member 330 and the buffering member 540. When the end 800 of the intermediate member 410 is drawn in the space, inner components of the camera module 155 may be visually covered by the intermediate member 410 through the predetermined gap 420, and the end 800 of the intermediate member 410 may also be invisible, and accordingly, the problem of degradation of aesthetic feature may not arise.

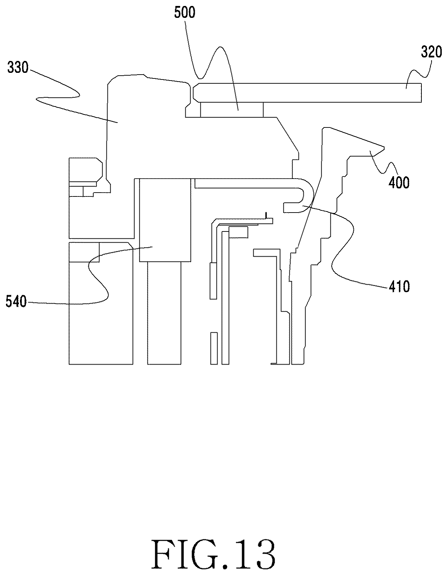

According to an embodiment of the disclosure, FIG. 13 is a view illustrating an example of the intermediate member of FIG. 6 which is separately disposed from the buffering member.

According to an embodiment of the disclosure, FIG. 13 is a view illustrating an example of the intermediate member 410 and the buffering member 540 which are disposed in parallel. For example, the buffering member 540 may be attached to at least part of one surface of the support member 330. For example, the first surface 920 of the intermediate member 410 may be attached to at least another part of the support member 330, such that the intermediate member 410 is disposed in parallel with the buffering member 540. When a space is formed in the camera module 155 to have the buffering member 540 and the intermediate member 410 disposed in parallel, the buffering member 540 may be attached to the support member 330 to be disposed at a position adjacent to a member vulnerable to an impact, separately from the intermediate member 410.

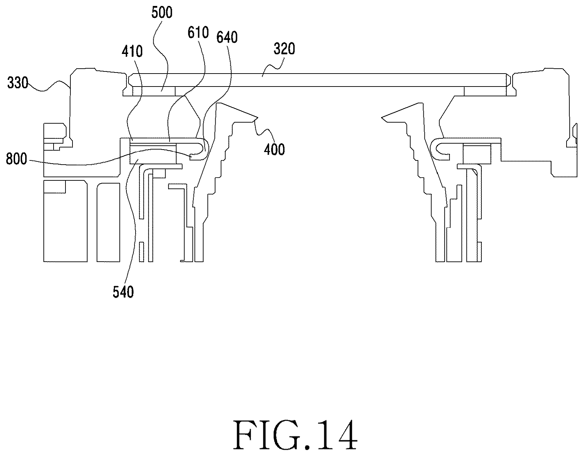

According to an embodiment of the disclosure, FIG. 14 is a view illustrating an example of the intermediate member which is attached to one surface of the support member and is disposed between the support member and the buffering member.

According to an embodiment of the disclosure, the first surface 920 of the first area 900 of the plane portion 910 formed in the intermediate member 410 may be disposed on one surface of the support member 330. The first surface 920 of the first area 900 of the plane portion 910 formed in the intermediate member 410 may be disposed on one surface of the support member 330. The first surface 920 of the first area 900 of the plane portion 910 formed in the intermediate member 410 may be attached to one surface of the support member 330. The second surface 930 of the first area of the plane portion 910 formed in the intermediate member 410 may be attached to the buffering member 540. At least part of the plane portion 610 of the intermediate member may be disposed between the support member 330 and the buffering member 540.

According to an embodiment of the disclosure, the intermediate member 410 may include a curved portion 940 which is extended from the first area 900 and has an end 800 bent to face the opposite direction of the transparent member 320. Based on the end 800 of the curved portion 940 being bent to face the opposite direction of the transparent member 320, the end 800 of the curved portion 940 may be invisible (e.g., not visually exposed) when the transparent member 320 is viewed from the outside of the electronic device 300. As the end 800 is invisible, quality of the appearance of the electronic device may increase.

According to an embodiment of the disclosure, as at least part of the curved portion 940 contacts the body tube 400, the predetermined gap 420 formed between the support member 330 and the body tube 400 may be covered.

Fig. 15 is a block diagram illustrating an electronic device 1501 in a network environment 1500 according to various embodiments. Referring to Fig. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thererto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as BluetoothTM, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

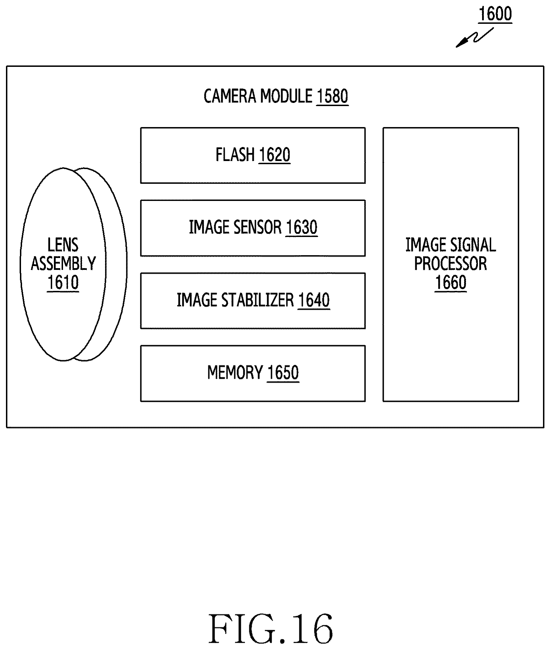

Fig. 16 is a block diagram 1600 illustrating the camera module 1580 according to various embodiments. Referring to Fig. 16, the camera module 1580 may include a lens assembly 1610, a flash 1620, an image sensor 1630, an image stabilizer 1640, memory 1650 (e.g., buffer memory), or an image signal processor 1660. The lens assembly 1610 may collect light emitted or reflected from an object whose image is to be taken. The lens assembly 1610 may include one or more lenses. According to an embodiment, the camera module 1580 may include a plurality of lens assemblies 1610. In such a case, the camera module 1580 may form, for example, a dual camera, a 360-degree camera, or a spherical camera. Some of the plurality of lens assemblies 1610 may have the same lens attribute (e.g., view angle, focal length, auto-focusing, f number, or optical zoom), or at least one lens assembly may have one or more lens attributes different from those of another lens assembly. The lens assembly 1610 may include, for example, a wide-angle lens or a telephoto lens.

The flash 1620 may emit light that is used to reinforce light reflected from an object. According to an embodiment, the flash 1620 may include one or more light emitting diodes (LEDs) (e.g., a red-green-blue (RGB) LED, a white LED, an infrared (IR) LED, or an ultraviolet (UV) LED) or a xenon lamp. The image sensor 1630 may obtain an image corresponding to an object by converting light emitted or reflected from the object and transmitted via the lens assembly 1610 into an electrical signal. According to an embodiment, the image sensor 1630 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1630 may be implemented using, for example, a charged coupled device (CCD) sensor or a complementary metal oxide semiconductor (CMOS) sensor.

The image stabilizer 1640 may move the image sensor 1630 or at least one lens included in the lens assembly 1610 in a particular direction, or control an operational attribute (e.g., adjust the read-out timing) of the image sensor 1630 in response to the movement of the camera module 1580 or the electronic device 1501 including the camera module 1580. This allows compensating for at least part of a negative effect (e.g., image blurring) by the movement on an image being captured. According to an embodiment, the image stabilizer 1640 may sense such a movement by the camera module 1580 or the electronic device 1501 using a gyro sensor or an acceleration sensor disposed inside or outside the camera module 1580. According to an embodiment, the image stabilizer 1640 may be implemented, for example, as an optical image stabilizer.

The memory 1650 may store, at least temporarily, at least part of an image obtained via the image sensor 1630 for a subsequent image processing task. For example, if image capturing is delayed due to shutter lag or multiple images are quickly captured, a raw image obtained (e.g., a Bayer-patterned image, a high-resolution image) may be stored in the memory 1650, and its corresponding copy image (e.g., a low-resolution image) may be previewed via the display device 1560. Thereafter, if a specified condition is met (e.g., by a user's input or system command), at least part of the raw image stored in the memory 1650 may be obtained and processed, for example, by the image signal processor 1660. According to an embodiment, the memory 1650 may be configured as at least part of the memory 1530 or as a separate memory that is operated independently from the memory 1530.

The image signal processor 1660 may perform one or more image processing with respect to an image obtained via the image sensor 1630 or an image stored in the memory 1650. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1660 may perform control (e.g., exposure time control or read-out timing control) with respect to at least one (e.g., the image sensor 1630) of the components included in the camera module 1580. An image processed by the image signal processor 1660 may be stored back in the memory 1650 for further processing, or may be provided to an external component (e.g., the memory 1530, the display device 1560, the electronic device 1502, the electronic device 1504, or the server 1508) outside the camera module 1580. According to an embodiment, the image signal processor 1660 may be configured as at least part of the processor 1520, or as a separate processor that is operated independently from the processor 1520. If the image signal processor 1660 is configured as a separate processor from the processor 1520, at least one image processed by the image signal processor 1660 may be displayed, by the processor 1520, via the display device 1560 as it is or after being further processed.

According to an embodiment, the electronic device 1501 may include a plurality of camera modules 1580 having different attributes or functions. In such a case, at least one of the plurality of camera modules 1580 may form, for example, a wide-angle camera and at least another of the plurality of camera modules1580 may form a telephoto camera. Similarly, at least one of the plurality of camera modules 1580 may form, for example, a front camera and at least another of the plurality of camera modules 1580 may form a rear camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In prior art, when a camera is driven, a gap may be formed between a body tube and a camera support member to prevent degradation of durability caused by movement of the body tube. An embodiment of the disclosure provides an electronic device which makes inner structures of a camera invisible through a gap between a body tube and a peripheral component of the body tube (for example, a support member) when viewed from the outside, and an intermediate member thereof.

An embodiment of the disclosure provides an electronic device which prevents moisture from being generated in an inner component (for example, an inside surface of a camera window) of the electronic device due to inflow of air, or an intermediate member.

An embodiment of the disclosure provides an electronic device which makes an inner structure of a camera invisible from the outside even when a body tube is moved based on driving of the camera, and an intermediate member.

According to an embodiment of the disclosure, an electronic device (for example, the electronic device 300 of FIG. 3, the electronic device 1401 of FIG. 14) may include a transparent member (for example, the transparent member 320 of FIGS. 3, 4, 5, 8, 10, 11, 12, 13), a support member (for example, the support member 330 of FIGS. 3, 4, 5, 8, 10, 11, 12, 13), an image sensor (for example, the image sensor 1630 of FIG. 15), a body tube (for example, the body tube 400 of FIGS. 4, 8, 10, 11, 12, 13), and an intermediate member (for example, the intermediate member 410 of FIGS. 4, 5, 8, 10, 11, 12, 13). The transparent member (for example, the transparent member 320 of FIGS. 3, 4, 5, 8, 10, 11, 12, 13) may be disposed to be visually exposed to an outside of the electronic device (for example, the electronic device 300 of FIG. 3, the electronic device 1401 of FIG. 14). The support member (for example, the support member 330 of FIGS. 3, 4, 5, 8, 10, 11, 12, 13) may be configured to support the transparent member (for example, the transparent member 320 of FIGS. 3, 4, 5, 8, 10, 11, 12, 13). The support member (for example, the support member 330 of FIGS. 3, 4, 5, 8, 10, 11, 12, 13) may include an opening corresponding to the transparent member (for example, the transparent member 320 of FIGS. 3, 4, 5, 8, 10, 11, 12, 13). The image sensor (for example, the image sensor 1630 of FIG. 15) may detect light entering through the transparent member (for example, the transparent member 320 of FIGS. 3, 4, 5, 8, 10, 11, 12, 13). The body tube (for example, the body tube 400 of FIGS. 4, 8, 10, 11, 12, 13) may accommodate at least one lens. The intermediate member (for example, the intermediate member 410 of FIGS. 4, 5, 8, 10, 11, 12, 13) may be in contact with a side surface of the body tube (for example, the body tube 400 of FIGS. 4, 8, 10, 11, 12, 13) that faces the support member (for example, the support member 330 of FIGS. 3, 4, 5, 8, 10, 11, 12, 13), at least part of the intermediate member being provided between the support member (for example, the support member 330 of FIGS. 3, 4, 5, 8, 10, 11, 12, 13) and the body tube (for example, the body tube 400 of FIGS. 4, 8, 10, 11, 12, 13).

According to an embodiment of the disclosure, the intermediate member (for example, the intermediate member 410 of FIGS. 4, 5, 8, 10, 11, 12, 13) may include a plane portion (for example, the plane portion 610 of FIG. 6) and a curved portion (for example, the curved portion 640 of FIG. 6) which is extended from the plane portion (for example, the plane portion 610 of FIG. 6). At least part of the plane portion (for example, the plane portion 610 of FIG. 6) may overlap at least part of the support member (for example, the support member 330 of FIGS. 3, 4, 5, 8, 10, 11, 12, 13) and be visually exposed to the outside of the electronic device (for example, the electronic device 300 of FIG. 3) in a direction of the transparent member, and at least part of the curved portion (for example, the curved portion 640 of FIG. 6) may be in contact with side surface of the body tube (for example, the body tube 400 of FIGS. 4, 8, 10, 11, 12, 13).

According to an embodiment, an end (for example, the end 800 of FIG. 8) of the curved portion (for example, the curved portion 640 of FIG. 6) of the intermediate member is bent to face a direction opposite of the transparent member (for example, the transparent member 320 of FIGS. 3, 4, 5, 8, 10, 11, 12, 13).

According to an embodiment of the disclosure, the electronic device (for example, the electronic device 300 of FIG. 3, the electronic device 1401 of FIG. 14) may further include a buffering member (for example, the buffering member 540 of FIGS. 5, 8, 10, 11, 12, 13). A first surface of the plane portion (for example, the plane portion 610 of FIG. 6) may be provided on the support member (for example, the support member 330 of FIGS. 3, 4, 5, 8, 10, 11, 12, 13), and a second surface of the plane portion (for example, the plane portion 610 of FIG. 6) may be provided on one surface of the buffering member (for example, the buffering member 540 of FIGS. 5, 8, 10, 11, 12, 13).

According to an embodiment of the disclosure, the electronic device (for example, the electronic device 300 of FIG. 3, the electronic device 1401 of FIG. 14) may further include a buffering member (for example, the buffering member 540 of FIGS. 5, 8, 10, 11, 12, 13). one surface of the buffering member (for example, the buffering member 540 of FIGS. 5, 8, 10, 11, 12, 13) may be provided on the support member (for example, the support member 330 of FIGS. 3, 4, 5, 8, 10, 11, 12, 13), and the first surface of the plane portion (for example, the plane portion 610 of FIG. 6) may be provided on another surface of the buffering member (for example, the buffering member 540 of FIGS. 5, 8, 10, 11, 12, 13).

According to an embodiment of the disclosure, an end of the curved portion (for example, the curved portion 640 of FIG. 6) may be provided in a space between the support member (for example, the support member 330 of FIGS. 3, 4, 5, 8, 10, 11, 12, 13), the buffering member (for example, the buffering member 540 of FIGS. 5, 8, 10, 11, 12, 13) and the intermediate member (for example, the intermediate member 410 of FIGS. 4, 5, 8, 10, 11, 12, 13), such that the end is not visually exposed to the outside of the electronic device (for example, the electronic device 300 of FIG. 3, the electronic device 1401 of FIG. 14) through the opening.

According to an embodiment of the disclosure, the at least part of the curved portion (for example, the curved portion 640 of FIG. 6) may cover a gap between the support member (for example, the support member 330 of FIGS. 3, 4, 5, 8, 10, 11, 12, 13) and the body tube (for example, the body tube 400 of FIGS. 4, 8, 10, 11, 12, 13).

According to an embodiment of the disclosure, at least part of the intermediate member (for example, the intermediate member 410 of FIGS. 4, 5, 8, 10, 11, 12, 13) may cover a gap between the support member (for example, the support member 330 of FIGS. 3, 4, 5, 8, 10, 11, 12, 13) and the body tube (for example, the body tube 400 of FIGS. 4, 8, 10, 11, 12, 13).

According to an embodiment of the disclosure, the intermediate member (for example, the intermediate member 410 of FIGS. 4, 5, 8, 10, 11, 12, 13) may be formed with an elastic material.

According to an embodiment of the disclosure, the intermediate member (for example, the intermediate member 410 of FIGS. 4, 5, 8, 10, 11, 12, 13) may include a plane portion (for example, the plane portion 610 of FIG. 6) which has a first thickness, and a curved portion (for example, the curved portion 640 of FIG. 6) which is extended from the plane portion (for example, the plane portion 610 of FIG. 6) and has a second thickness thinner than the first thickness.

According to an embodiment of the disclosure, the electronic device (for example, the electronic device 300 of FIG. 3, the electronic device 1401 of FIG. 14) may further include: an actuator configured to control a position of the body tube (for example, the body tube 400 of FIGS. 4, 8, 10, 11, 12, 13); a memory (for example, the memory 1430 of FIG. 14) configured to store instructions; and a processor (for example, the processor 1430 of FIG. 14, the image signal processor 1560 of FIG. 15) electrically connected to the actuator. The instructions may be executed by the processor (for example, the processor 1430 of FIG. 14, the image signal processor 1560 of FIG. 15) to cause the electronic device (for example, the electronic device 300 of FIG. 3, the electronic device 1401 of FIG. 14) to correct an offset value of a driving current for driving the actuator, based on a position of the body tube (for example, the body tube 400 of FIGS. 4, 8, 10, 11, 12, 13).

According to an embodiment of the disclosure, an intermediate member (for example, the intermediate member 410 of FIGS. 4, 5, 8, 10, 11, 12, 13) covering at least part of a gap between a body tube (for example, the body tube 400 of FIGS. 4, 8, 10, 11, 12, 13) and a support member (for example, the support member 330 of FIGS. 3, 4, 5, 8, 10, 11, 12, 13) may include: a first area comprising a plane portion (for example, the plane portion 610 of FIG. 6) at least partially provided on the support member (for example, the support member 330 of FIGS. 3, 4, 5, 8, 10, 11, 12, 13); and a second area extending from the first area and at least partially in contact with the body tube (for example, the body tube 400 of FIGS. 4, 8, 10, 11, 12, 13). A part in contact with the body tube (for example, the body tube 400 of FIGS. 4, 8, 10, 11, 12, 13) may include a curved portion (for example, the curved portion 640 of FIG. 6).

According to an embodiment of the disclosure, the intermediate member (for example, the intermediate member 410 of FIGS. 4, 5, 8, 10, 11, 12, 13) may be formed to have an end of the curved portion (for example, the curved portion 640 of FIG. 6) bent to face a direction opposite of the support member (for example, the support member 330 of FIGS. 3, 4, 5, 8, 10, 11, 12, 13).

According to an embodiment of the disclosure, the intermediate member (for example, the intermediate member 410 of FIGS. 4, 5, 8, 10, 11, 12, 13) may further comprise a third area connected with one end of the curved portion (for example, the curved portion 640 of FIG. 6). The third area may comprise a second opening portion (for example, the second opening portion 690 of FIG. 6). The first area may include a first opening portion (for example, the first opening portion 680 of FIG. 6). The body tube (for example, the body tube 400 of FIGS. 4, 8, 10, 11, 12, 13) may be configured to accommodate at least one lens (for example, the lens assembly 1510 of FIG. 15). The intermediate member (for example, the intermediate member 410 of FIGS. 4, 5, 8, 10, 11, 12, 13) may be configured to transmit external light to the at least one lens through the first opening portion (for example, the first opening portion 680 of FIG. 6) and the second opening portion (for example, the second opening portion 690 of FIG. 6).

According to an embodiment of the disclosure, the support member (for example, the support member 330 of FIGS. 3, 4, 5, 8, 10, 11, 12, 13) may be provided on one surface of a buffering member (for example, the buffering member 540 of FIGS. 5, 8, 10, 11, 12, 13), and the plane portion (for example, the plane portion 610 of FIG. 6) of the intermediate member (for example, the intermediate member 410 of FIGS. 4, 5, 8, 10, 11, 12, 13) may be provided on another surface of the buffering member (for example, the buffering member 540 of FIGS. 5, 8, 10, 11, 12, 13).

According to an embodiment of the disclosure, the curved portion (for example, the curved portion 640 of FIG. 6) may cover at least part of the gap between the support member (for example, the support member 330 of FIGS. 3, 4, 5, 8, 10, 11, 12, 13) and the body tube (for example, the body tube 400 of FIGS. 4, 8, 10, 11, 12, 13).

According to an embodiment of the disclosure, the plane portion (for example, the plane portion 610 of FIG. 6) may be provided on one surface of a buffering member (for example, the buffering member 540 of FIGS. 5, 8, 10, 11, 12, 13).

According to an embodiment of the disclosure, the support member (for example, the support member 330 of FIGS. 3, 4, 5, 8, 10, 11, 12, 13) may support a transparent member (for example, the transparent member 320 of FIGS. 3, 4, 5, 8, 10, 11, 12, 13). A third opening portion may correspond to the transparent member (for example, the transparent member 320 of FIGS. 3, 4, 5, 8, 10, 11, 12, 13). The intermediate member (for example, the intermediate member 410 of FIGS. 4, 5, 8, 10, 11, 12, 13) may be formed such that an end of the curved portion (for example, the curved portion 640 of FIG. 6) is provided in a space between the support member (for example, the support member 330 of FIGS. 3, 4, 5, 8, 10, 11, 12, 13), the buffering member (for example, the buffering member 540 of FIGS. 5, 8, 10, 11, 12, 13) and the intermediate member (for example, the intermediate member 410 of FIGS. 4, 5, 8, 10, 11, 12, 13) to not be visually exposed to the outside through the third opening portion.

According to an embodiment of the disclosure, the intermediate member (for example, the intermediate member 410 of FIGS. 4, 5, 8, 10, 11, 12, 13) may be formed with an elastic material.

According to an embodiment of the disclosure, the plane portion (for example, the plane portion 610 of FIG. 6) may have a first thickness and the curved portion (for example, the curved portion 640 of FIG. 6) may have a second thickness thinner than the first thickness.

According to an embodiment of the disclosure, a gap between a body tube accommodating a lens and a support member supporting a camera window is filled with an intermediate member, so that an inner structure of a camera is visually invisible when viewed from the outside and aesthetic features are improved.

According to an embodiment of the disclosure, a gap between a body tube and a support member is filled with an intermediate member, so that a camera window is prevented from steaming up due to warm air in a camera module.

According to an embodiment of the disclosure, an intermediate member formed with an elastic material is disposed between a support member and a body tube, so that a camera is prevented from being influenced due to elasticity of the intermediate member even if the body tube is moved when the camera is driven.

In addition, various effects that are directly or indirectly understood through the disclosure may be provided.

Methods based on the claims or the embodiments disclosed in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for allowing the electronic device to execute the methods based on the claims or the embodiments disclosed in the disclosure.

The program (the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to presented situations for convenience of explanation, and the disclosure is not limited to a single element or plural elements. An element which is expressed in a plural form may be configured in a singular form or an element which is expressed in a singular form may be configured in plural number.

The term "unit" or "module" used in the disclosure refer to a hardware component such as a processor or a circuit, and/or a software component executed by a hardware component such as a processor.

A "unit", "module" may be implemented by a program that is stored in a storage medium which may be addressed, and is executed by a processor. For example, a "unit", "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays and parameters.

Specific execution explained in the disclosure is merely an example, and the scope of the disclosure is not limited by any method. For the sake of clarity of the specification, descriptions of related-art electronic components, control systems, software, and other functional aspects of the systems are omitted.

In the disclosure, such phrase as "including at least one of a, b, or c" may refer to "including only a", "including only b", "including only c", "including a and b", "including band c, "including a and c", "including all of a, b, c".

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. An electronic device comprising:
a transparent member visually exposed to an outside of the electronic device;
a support member configured to support the transparent member and comprising an opening corresponding to the transparent member;
an image sensor configured to detect light entering through the transparent member;
a body tube configured to accommodate at least one lens; and
an intermediate member in contact with a side surface of the body tube that faces the support member, at least part of the intermediate member being provided between the support member and the body tube.

2. The electronic device of claim 1, wherein the intermediate member comprises a plane portion and a curved portion which is extended from the plane portion,
wherein at least part of the plane portion overlaps at least part of the support member and is visually exposed to the outside of the electronic device in a direction of the transparent member, and
wherein at least part of the curved portion is in contact with the side surface of the body tube.

3. The electronic device of claim 2, wherein an end of the curved portion of the intermediate member is bent to face a direction opposite of the transparent member.

4. The electronic device of claim 2, further comprising a buffering member,
wherein a first surface of the plane portion is provided on one surface of the support member, and
wherein a second surface of the plane portion is provided on one surface of the buffering member.

5. The electronic device of claim 2, further comprising a buffering member,
wherein one surface of the buffering member is provided on one surface of the support member, and
wherein a first surface of the plane portion is provided on another surface of the buffering member.

6. The electronic device of claim 5, wherein an end of the curved portion is provided in a space between the support member, the buffering member and the intermediate member, such that the end is not visually exposed to the outside of the electronic device through the opening.

7. The electronic device of claim 6, wherein the at least part of the curved portion covers a gap between the support member and the body tube.

8. The electronic device of claim 1, wherein the at least part of the intermediate member covers a gap between the support member and the body tube.

9. The electronic device of claim 1, wherein the intermediate member is formed with an elastic material.

10. The electronic device of claim 9, wherein the intermediate member comprises a plane portion which has a first thickness, and a curved portion which is extended from the plane portion and has a second thickness thinner than the first thickness.

11. The electronic device of claim 1, further comprising:
an actuator configured to control a position of the body tube;
a memory configured to store instructions; and
a processor electrically connected to the actuator,
wherein the instructions, when executed by the processor, cause the electronic device to correct an offset value of a driving current for driving the actuator, based on a position of the body tube.

12. An intermediate member covering at least part of a gap between a body tube and a support member, the intermediate member comprising:
a first area comprising a plane portion at least partially provided on the support member; and
a second area extending from the first area and at least partially in contact with the body tube,
wherein a part in contact with the body tube comprises a curved portion.

13. The intermediate member of claim 12, wherein an end of the curved portion is bent to face a direction opposite of the support member.

14. The intermediate member of claim 13, wherein the intermediate member further comprises a third area connected with one end of the curved portion, the third area comprising a second opening portion,
wherein the first area comprises a first opening portion,
wherein the body tube is configured to accommodate at least one lens, and
wherein the intermediate member is configured to transmit external light to the at least one lens through the first opening portion and the second opening portion.

15. The intermediate member of claim 12,
wherein the support member is provided on one surface of a buffering member, and
wherein the plane portion is provided on another surface of the buffering member.
